(19) Europäisches Patentamt
European Patent Office
Office européen des brevets

(11) Publication number: 0 085 404
A1

(12) # EUROPEAN PATENT APPLICATION

(21) Application number: 83100768.7

(22) Date of filing: 27.01.83

(51) Int. Cl.$^3$: C 08 K 5/52
C 08 L 23/08

(30) Priority: 28.01.82 US 344273

(43) Date of publication of application: 10.08.83 Bulletin 83/32

(84) Designated Contracting States: DE FR GB IT

(71) Applicant: BORG-WARNER CHEMICALS INC.
International Center
Parkersburg West Virginia 26101(US)

(72) Inventor: Lewis, Elyse M.
113 Sherwood Drive
Williamstown W. Virginia 26187(US)

(72) Inventor: Valdiserri, Leo L.
Box 285 RR No. 1
Belpre Ohio 45714(US)

(74) Representative: Vossius Vossius Tauchner Heunemann Rauh
Siebertstrasse 4 P.O. Box 86 07 67
D-8000 München 86(DE)

(54) **Stabilized linear low density polyethylene.**

(57) A linear low density polyethylene composition containing a pentaerythritol diphosphite. The pentaerythritol diphosphite acts to stabilize the composition under conditions which normally cause the polymer to undergo deterioration, as shown by the development of color.

EP 0 085 404 A1

Our Ref.: S 228EP
Case: 081095-M

BORG-WARNER CORPORATION
Chicago, Illinois 60604 / USA

VOSSIUS · VOSSIUS · TAUCHNER
HEUNEMANN · RAUH
PATENTANWÄLTE
SIEBERTSTR. 4, 8000 MÜNCHEN 80
TEL. (089) 47 40 75

0085404

## STABILIZED LINEAR LOW DENSITY POLYETHYLENE

### Description

This invention relates as indicated to stabilized linear low density polyethylene compositions. More particularly, it relates to such compositions wherein the stabilizing component is an organic phosphite ester. Still more particularly, it relates to the stabilization of linear low density polyethylene during processing, fabrication and end use, i.e., at elevated temperatures.

Polyethylene has in the past been produced by two basic processes. A high pressure process employing oxygen- or radical-catalysis is used to manufacture low density (branched) polyethylene. An estimated $10^7$ metric tons were prepared in 1979. A low pressure process is used to manufacture high density (linear) polyethylene. Each process produces not only a type of polyethylene having its own unique properties, but also many different resins each being suitable for a variety of uses. The density of these polyethylenes is related to the linear character of the polymer chain, the highly linear polymers being more dense because they can pack together more tightly than the branched chain polymers.

In 1977 a new (third) type of polyethylene was disclosed. See Chem. Eng. News, Dec. 5, 1977, pp 21-22. It was described as linear low-density polyethylene. Despite its preparation by a process which utilizes relatively low pressures, e. g., 7.0 - 21.0 kg/cm², the product is characterized by a low density. In

this respect it is similar to the low density polyethylene which presently is prepared in very large quantities by the high pressure process. At the same time its structure is linear.

In any event this newly available linear low density polyethylene is quite unlike previously known polyethylenes. Its low density, of course, distinguishes it from high density polyethylene; this difference, while not notably significant in itself, is reflected by many marked physical and chemical dissimilarities well-known in the art. With respect to ordinary low density polyethylene this new linear low density polyethylene is characterized by higher environmental stress crack resistance, higher heat-distortion temperatures, and higher impact strength and flex life, along with lower warpage in injection molded and rotationally molded parts. It also possess higher puncture resistance, tear strength and tensile strength in blown and cast films, and superior low-temperature flexibility, high-temperature tensile strength and stress crack resistance in wire and cable coatings and blow molded parts.

Moreover, although the previously known low density polyethylene is quite stable thermally, as shown by its resistance to the development of color upon repeated extrusion, the newer linear low density polyethylene is not so stable. This kind of stability is important because it permits scrap polymer to be reworked and thus avoids a lot of waste. It is, therefore, necessary that linear low density polyethylene be made stable to repeated extrusions in some way or other.

It appears at this early stage of development that linear low density polyethylene will be used in those applications in which ordinary (branched chain) low density polyethylene has been used, e.g., in film and sheet for consumption by food and non-food packaging, consumer and industrial bags, and in agricultural mulching.

U.K. Patent Specification 1,526,603 shows polypropylene compositions containing a bis-(dialkylphenyl) pentaerythritol diphosphite. These compositions are shown to be quite stable to repeated extrusions in the sense that they continue to be thermally stable after a number of extrusions. Also, the melt index of such compositions remains substantially unchanged after repeated extrusions.

Japanese Patent Application No. 1977-91309 (Patent Publication No. 1979-25951) shows a polyethylene composition containing a minor proportion of bis-(2,4-ditertiarybutylphenyl) pentaerythritol diphosphite. The composition is relatively stable to deterioration in air at elevated temperatures (150°C).

Commonly assigned pending application Serial No. 124,362, filed February 25, 1980 deals with stabilized high density polyethylene compositions. The stabilization is accomplished by means of a small proportion of bis-(2,4-ditertiarybutylphenyl) pentaerythritol diphosphite.

The use of tris(nonylphenyl)phosphite to stabilize linear low density polyethylene is taught at pages 394-5 of Kirk-Othmer's Encyclopedia of Chemical Technology, Third Edition (1981).

The invention here is a stabilized polymer composition comprising linear low density polyethylene and a minor proportion, sufficient to enhance the resistance of said linear low density polyethylene to deterioration, of a pentaerythritol diphosphite.

As noted earlier, the linear low density polyethylene may be prepared at a pressure of 7.0 - 21.0 kg/cm². The temperature of such a process likewise is convenient, e.g., 80-100°C. Somewhat higher pressures and temperatures have been reported. A mixture of 0.085 mol of 1-butene and 0.915 mol of ethylene, for example, is passed over a fluid bed catalyst comprising chromium, titanium and fluorine on a silica gel support. The resulting product is a copolymer of 1-butene and ethylene, commonly referred to as linear low density polyethylene.

The pentaerythritol diphosphite conforms to the molecular structure

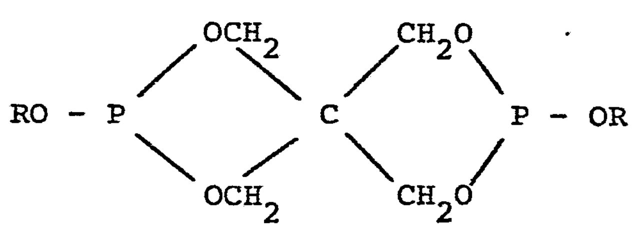

spiro

and

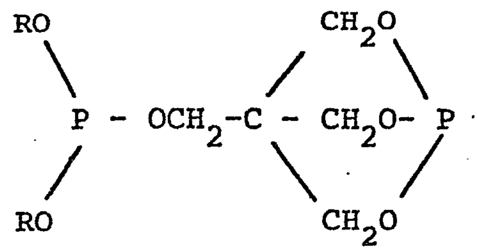

caged

wherein R is alkyl, cycloalkyl, phenylalkyl or alkylphenyl. The alkyl group may contain 8-20 carbon atoms; illustrative examples include decyl, dodecyl, tetradecyl, hexadecyl, octadecyl (stearyl) and eicosyl. The cycloalkyl group may contain 6-20 carbon atoms and includes such examples as cyclohexyl, 2-methylcyclohexyl, 4-n-hexylcyclohexyl, 4-n-octylcyclohexyl and the like. The alkylphenyl groups generally are 2,4-dialkylphenyl wherein the alkyl radicals are bulky, i.e., branched chain. Preferably they are tertiary alkyl radicals such as tertiary butyl, tertiary amyl, and the like. These tertiary alkyl radicals should contain 4-8 carbon atoms.

The structure of the pentaerythritol diphosphite may be either that of the spiro or caged isomers shown above. The spiro isomer is somewhat more stable to hydrolysis and for this reason is preferred for many applications. For economic reasons, however, arising from the ordinary methods of preparing such phosphites, mixtures of spiro and caged isomers are most usually used.

The concentration of pentaerythritol diphosphite in the polymer composition herein ranges from about 0.01% to about 1.0%. Preferably the desired range of concentration is from about 0.01% to about 0.1%, i.e., 100 ppm to 1000 ppm.

The pentaerythritol diphosphites herein can be used in combination with a phenolic antioxidant. Illustrative species of such phenolic antioxidants include esters of 3[3',5'-ditertiarybutyl -4'-hydroxyphenyl] propionic acid such as the stearyl and pentaerythritol esters, 2,6-ditertiarybutyl-p-cresol, 1,3,5-tris-(3,5-ditertiarybutyl-4-hydroxybenzyl) mesitylene, 1,1,3-tris-(2-methyl-4-hydroxy-5-tertiarybutyl) butane, etc. Mixtures of two or more of such phenolic antioxidants may be used in particular instances. The amount of such phenolic antioxidant may range from about 0.005 to about 0.5%.

The polymer compositions of the invention may also contain metal carboxylates such as calcium stearate, magnesium stearate, zinc laurate and the like, and metal oxides such as magnesium oxide and zinc oxide. Other additives may also be present including antistatic agents, slip agents, UV stabilizers, fillers, pigments, etc.

The pentaerythritol diphosphites are effective to impart increased color stability to the linear low density polyethylene compositions of the invention. That is, they inhibit the development of color in such polymers under conditions where they ordinarily develop color. This is shown by the data in Table I. Polymer compositions containing linear low density polyethylene, 150 ppm of the stearyl ester of 3(3',5'-ditertiarybutyl-4'-hydroxyphenyl) propionic acid and the indicated (in Table I) amounts of phosphite are prepared by mixing the ingredients for 1.5 hours in a PK (twin shell) blender, then extruded seven times through a 19.05mm Brabender extruder at a stock temperature of 215.6°C

The extrudate from the first and seventh extrusion are compression molded at 148.9°C into 1.52 mm thick specimens for color measurement. The color ratings, made on a Hunter Lab Color Meter, are shown in the Table.

TABLE I

| PHOSPHITE (ppm) | YELLOWNESS INDEX 1ST EXTRUSION | YELLOWNESS INDEX 7TH EXTRUSION |
|---|---|---|
| NONE | 0.2 | 8.2 |
| TNPP (800) | 0.8 | 10.9 |
| TTBPP (800) | -0.5 | 9.8 |
| TDBPBD (800) | -3.0 | 6.6 |
| (DS)PDP (800) | -4.2 | -0.3 |
| (BTBP)PDP (800) | -3.4 | -0.7 |
| (DS)PDP (600) | -2.4 | 5.7 |
| (DS)PDP (400) | -3.2 | 5.4 |
| (DS)PDP (200) | -0.7 | 7.1 |
| (DS)PDP (600) + CaSt (250) | -2.5 | 0.64 |

TNPP - tris-(nonylphenyl) phosphite

TTBPP - tris-(2,4-ditertiarybutylphenyl) phosphite

TDBPBD - tetrakis-(2,4-ditertiarybutylphenyl) 4,4'-bisphenylene diphosphonite

(DS)PDP - distearyl pentaerythritol diphosphite

(BTBP)PDP - bis-(2,4-ditertiarybutylphenyl) pentaerythritol diphosphite

CaSt - Calcium stearate

A linear low density polyethylene composition containing no additives is rated 7.4 after one extrusion and 7.7 after seven extrusions. It is thus apparent that while the phenolic inhibitor is effective to inhibit the development of color to a limited extent, i.e., during one extrusion at 215.6°C the pentaerythritol diphosphites are effective to provide such protection through seven such extrusions.

The effectiveness of the pentaerythritol diphosphite herein as color stabilizers in polymer compositions containing no other stabilizers is shown in Table II. The data is obtained as in Table I.

TABLE II

| PHOSPHITE (ppm) | YELLOWNESS INDEX 1ST EXTRUSION | YELLOWNESS INDEX 7TH EXTRUSTION |
|---|---|---|
| NONE | 7.4 | 7.7 |
| (BTBP) PDP (600) | -3.8 | -2.5 |
| (DS) PDP (600) | -4.5 | 1.3 |

All parts and percentages herein unless otherwise expressly stated are by weight.

CLAIMS

1. A stabilized polymer composition comprising linear low density polyethylene and a minor proportion, sufficient to enhance the resistance of said linear low density polyethylene to deterioration, of a pentaerythritol diphosphite.

2. The stabilized polymer composition of Claim 1 wherein the pentaerythritol diphosphite is a mixture of spiro and caged isomers.

3. The stabilized polymer composition of Claim 1 wherein the pentaerythritol diphosphite is a dialkyl pentaerythritol diphosphite.

4. The stabilized polymer composition of Claim 3 wherein the alkyl groups of the dialkyl pentaerythritol diphosphite each contain 10-20 carbon atoms.

5. The stabilized polymer composition of Claim 1 wherein the pentaerythritol diphosphite is a bis-(dialkylphenyl) pentaerythritol diphosphite.

6. The stabilized polymer composition of Claim 5 wherein the dialkylphenyl groups are 2,4-ditertiarybutylphenyl groups.

European Patent Office

# EUROPEAN SEARCH REPORT

0085404
Application number

EP 83 10 0768

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 180 498 (C.J. SPIVACK) * Claims; column 4, lines 27-42 * | 1-2 | C 08 K 5/52<br>C 08 L 23/08 |
| | --- | | |
| X | US-A-4 305 866 (J. YORK et al.) * Claim 7 * | 1-2,5-6 | |
| | --- | | |
| X | FR-A-2 305 438 (BORG-WARNER) * Claims; page 1, line 23 * | 1-4 | |
| | ----- | | |
| | | | TECHNICAL FIELDS SEARCHED (Int. Cl. 3) |
| | | | C 08 K<br>C 08 L |

The present search report has been drawn up for all claims

| Place of search | Date of completion of the search | Examiner |
|---|---|---|
| THE HAGUE | 15-04-1983 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document